# EUROPEAN PATENT SPECIFICATION

(11) **EP 0 964 477 B1**
(45) Date of publication and mention of the grant of the patent: **16.01.2002**
(21) Application number: 99111032.1
(22) Date of filing: 11.06.1999
(51) Int. Cl.: H01Q 21/30, H01Q 5/00, H01Q 1/52, H01Q 1/24

(54) **Antenna sharing device for dual frequency band**
Einrichtung zur Antennenteilung für zwei Frequenzbänder
Dispositif de partage d' antenne pour deux bandes de fréquence

(30) Priority: 11.06.1998 JP 16332098
(43) Date of publication of application: 15.12.1999
(73) Proprietor: TOKIN CORPORATION, Sendai-shi Miyagi-ken 982 (JP)
(72) Inventor: Furuta, Atsushi, Tokin Corporation, Sendai-shi, Miyagi (JP); Sasaki, Nobuhiro, Tokin Corporation, Sendai-shi, Miyagi (JP); Yano, Takeshi, Tokin Corporation, Sendai-shi, Miyagi (JP)
(74) Representative: Prüfer, Lutz H., Dipl.-Phys.

(56) References cited:
- EP-A- 0 578 160
- EP-A- 0 744 831
- EP-A- 0 823 751
- EP-A- 0 865 169

## Description

### BACKGROUND OF THE INVENTION

The present invention relates to an antenna sharing device for use of a common antenna by a transmitter and a receiver and, in particular, to such an antenna sharing device for dual frequency band.

A radio communication device comprises a transmitter and receiver, a single antenna, and a duplexer or an antenna sharing device for enabling the transmitter and the receiver to commonly use the single antenna so as to communicate with another device in use of a frequency band.

The duplexer, typically, comprises a transmitter side filter having an input terminal connected to the transmitter and a receiver side filter having an output terminal connected to the receiver. The transmitter side filter and the receiver side filter have an output terminal and an input terminal, respectively, which are commonly connected to an antenna terminal. The transmitter side filter is required to have a low insertion loss and is made of a band elimination filter having a blocking attenuation in the range of the receiving frequency band and also attenuation for removing two and three times harmonic frequency components of the transmitting frequency. The band elimination filter is implemented by use of dielectric resonator, inductance coil, and capacitor.

The receiver side filter is also made of another band elimination filter which has a blocking attenuation in the range of the transmitting frequency band and also attenuation for removing spurious components at the local frequency and image frequency. This elimination filter is also implemented by use of dielectric resonator, inductance coil, and capacitor.

Recently, a mobile communication device has had two transmitter-receiver units for dual communication systems, for example, GSM (global system for mobile communication) and DCS (digital cellular system) using different frequency bands. In order to enable the two transmitter-receiver units to use a single antenna, the mobile communication device is provided with an antenna sharing device for dual frequency band which comprises two duplexers which are connected to the two units respectively, and a switch such as an electronic switch for selecting one of the two duplexers to be connected to the single antenna.

The conventional antenna sharing device for the dual frequency band has such a problem that the device is large in size because two single band antenna resonators are employed.

Further, there is a problem that the band elimination filter is required to have an increased attenuation in the blocking frequency band so as to prevent cross talk of the received signal, which results in increase of the insertion loss. This causes increase of the power consumption at a power amplifier so as to insure the necessary transmission power and results in a problem that the service life of a battery is shortened.

The switch is generally driven by ON/OFF of a supply of an electric power thereto. During a standby time period for waiting signals in dual communication systems, it is necessary to change over the switch from one to the other of the two duplexers alternately at predetermined intervals. Therefore, an electric power needs to be supplied continuously even a non-communication time period. Consequently, power consumption of the battery increases, so that the possible standby time is decreased.

EP 0 744 831 A1 discloses an antenna sharing device according to the preamble of claim 1.

EP 0 578 160 A1 discloses an antenna switching apparatus having λ/4 lines and electronic switching elements for isolating a receiver input from a transmission signal.

### SUMMARY OF THE INVENTION

Accordingly, an object of the present invention is to provide an antenna sharing device for dual frequency band which is small in size, light in weight, low in cost, and long in the standby time.

To achieve the above object, the present invention provides an antenna sharing device for commonly using a single antenna by a first transmitter and receiver for a first communication system using a first frequency band and a second transmitter and receiver for a second communication system using a second frequency band. The antenna sharing device comprises:
a first transmitter side filter to be connected to the first transmitter and having a first output terminal for passing a first transmission frequency signal from the first transmitter to the first output terminal;
a second transmitter side filter to be connected to the second transmitter and having a second output terminal for passing a second transmission frequency signal from the second transmitter to the second output terminal;
a first switch connected to the first output terminal of the first transmitter side filter for permitting the first transmission frequency signal on the first output terminal to flow to a transmission point when the first switch is turned on;
a second switch connected to the second output terminal of the second transmission side filter for permitting the second transmission frequency signal on the second output terminal to flow to the transmission point when the second switch is turned on;
a first receiver side filter to be connected to the first receiver and having a first input terminal connected to a reception point for receiving a reception signal, the first receiver side filter being for selecting a second reception frequency signal from the reception signal received from the first input terminal to filter the first reception frequency signal to the first receiver;
a second receiver side filter to be connected to the second receiver and having a second input terminal connected to the reception point for receiving the reception signal, the second receiver side filter being for selecting a second reception frequency signal from the reception signal received from the second input terminal to filter the second reception frequency signal to the second receiver; and
a mode selector switch having a common connection point to be connected to the single antenna, the mode selection switch connecting the common connection point to the reception point when the mode selector switch is in a reception mode, the mode selector switch disconnecting the common connection point and the transmission point from the reception point but permitting signal transmission from the transmission point to the common connection point when the mode selection switch is in a transmission mode.

In the antenna sharing device, the mode selector switch may comprise a first and second fixed contacts connected to the transmission point and the reception point, respectively, and a wiper contact connected to the common connection point and to be selectively brought into contact with one of the first and second fixed contacts for selectively connecting the common connection point to the transmission point or the reception point.

In the antenna sharing device, the first and second transmitter side filters may be composed of first and second low pass filters, respectively.

In the antenna sharing device, the first and second receiver side filters may be composed of first and second band pass filters, respectively.

The first and second switches may be first and second electronic switches, respectively, and the transmission point is directly connected to the common connection point.

The mode selector switch may comprise a phase shifter connecting between the common connection point and the reception point, and a third electronic switch connecting between the reception point and the ground.

### BRIEF DESCRIPTION OF THE DRAWINGS

Fig. 1 is a diagram showing an example of the structure of a conventional antenna sharing device for dual frequency band;
Fig. 2 is a diagram showing an example of a frequency characteristic of a duplexer used in the conventional antenna sharing device in Fig. 1;
Fig. 3 is a block diagram showing an antenna sharing device for dual frequency band according to a first embodiment of the present invention;
Fig. 4 is a block diagram showing an antenna sharing device for dual frequency band according to a second embodiment of the present invention;
Fig. 5A is a diagram showing an example of a passing frequency characteristic of a GSM transmitter side filter used in the first and second embodiments of the present invention;
Fig. 5B is a diagram showing an example of an isolation characteristic of the GSM transmitter side filter;
Fig. 6A is a diagram showing an example of a passing frequency characteristic of a DCS transmitter side filter used in the first and second embodiments of the present invention;
Fig. 6B is a diagram showing an example of an isolation characteristic of the DCS transmitter side filter;
Fig. 7 is a diagram showing an example of a passing frequency characteristic of a GSM receiver side filter used in the first and second embodiments of the present invention; and
Fig. 8 is a diagram showing an example of a passing frequency characteristic of a DCS receiver side filter used in the first and second embodiments of the present invention.

### DESCRIPTION OF PREFERRED EMBODIMENTS

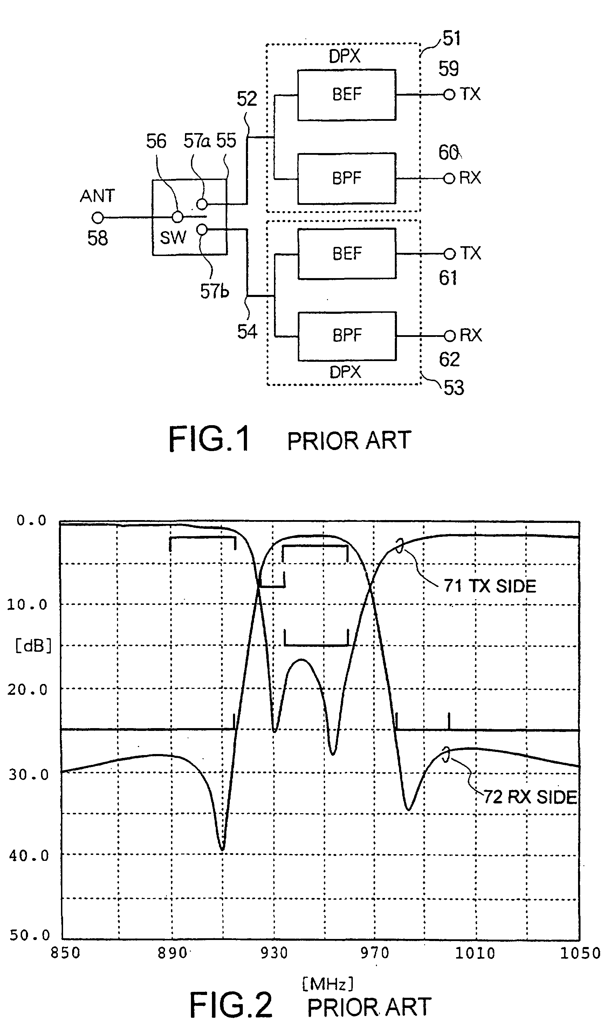

Prior to description of the preferred embodiments of the present invention, a conventional antenna sharing device for dual frequency band will be described with reference to Figs. 1 and 2 to make better understanding of the present invention.

Referring to Fig. 1, the known antenna sharing device shown therein comprises a first duplexer (DPX) 51 for a first communication system, for example, the GSM, a second duplexer 53 for a second communication system, for example, the DCS and a switch 55. The first and the second duplexers 51 and 53 have first and second antenna connecting terminals 52 and 54, respectively, which are connected to first and second fixed contacts 57a and 57b of the switch 55, respectively. The switch 55 has a wiper contact 57a which is selectively connected to one of the first and second fixed contacts 57a and 57b and which is connected to an antenna terminal 58. In use of the first system, the wiper contact 56 is turned to the first fixed contact 57a, so that the switch 55 connects the antenna terminal 58 with the first antenna connecting terminal 52.

If the second system is used, the wiper contact 56 is turned to the second fixed contact 57b, so that the witch 55 connects the antenna terminal 58 with the second antenna connecting terminal 54.

The first duplexer 51 comprises a transmitter side and a receiver side band-pass filter (BPF) commonly connected to the first antenna connecting terminal 52. The both band-pass filter have a transmitter side terminal 59 to be connected to the transmitter (TX) for the first system, and a receiver side terminal 60 to be connected to the receiver (RX) for the first system, respectively.

The second duplexer 53 comprises a transmitter side and a receiver side band-pass filter (BPF) commonly connected to the second antenna connecting terminal 54. The both band-pass filters have a transmitter side terminal 61 to be connected to the transmitter (TX) for the second system, and a receiver side terminal 62 to be connected to the receiver (RX) for the second system, respectively.

Fig. 2 shows a typical frequency characteristic of a known duplexer. Referring to Fig. 2, a curve 71 shows that at the transmitter side and a curve 72 shows that at the receiver side.

The switch 55 is usually composed of PIN diode, MMIC or the like which carries out the selecting operation by ON/OFF of supply of electric power of about 3 V/5 mA thereto. In order to receive signals of both of first and second systems, it is necessary to continue the selecting operation by the switch 55 at predetermined intervals.

The conventional antenna sharing device for dual frequency band has problems as described in the preamble.

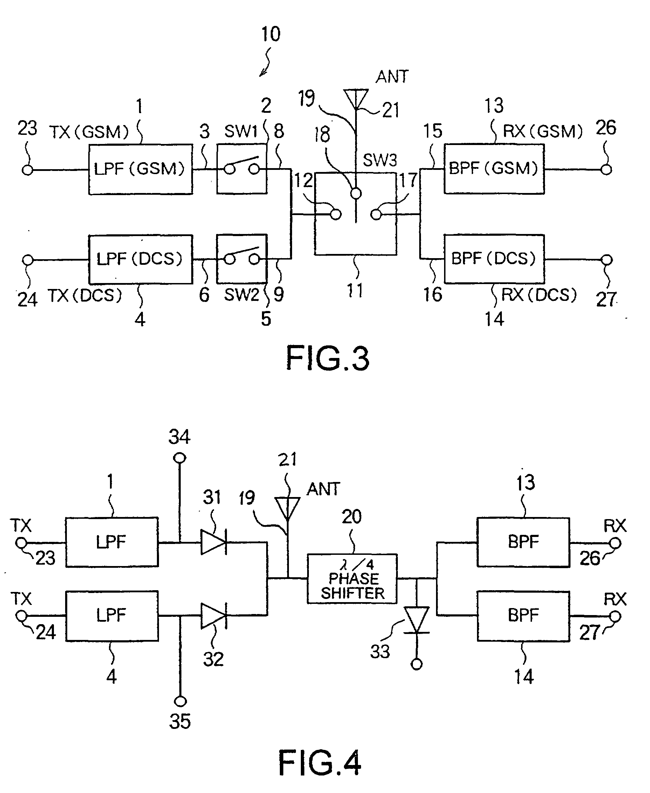

Now, embodiments of the present invention will be described with reference to Figs. 3-8.

Referring to Fig. 3, an antenna sharing device 10 for dual frequency band according to a first embodiment of the present invention is shown as that for two systems of GSM and DCS.

The device shown therein comprises a low pass filter (LPF) 1 as a GSM transmitter side filter. The GSM transmitter side filter 1 has an output terminal 3 which is connected to a first switch 2. Another low pass filter 4 as a DCS transmitter side filter has an output terminal 6 which is connected to a second switch 5. The first switch 2 and the second switch 5 have terminals 8 and 9 which are commonly connected to a first fixed contact 12 of a third switch 11 for selecting one of a transmission mode and a reception mode. A band pass filter 13 as a GSM receiver side filter and another band pass filter 14 as a DCS receiver side filter have input terminals 15 and 16, respectively, which are commonly connected to a second fixed contact 17 of the third switch 11.

The third switch 11 further has a wiper contact 18 which is connected to antenna 21 through an antenna terminal 19. The wiper contact 18 is selectively connected to the first and the second fixed contacts 12 and 17 for selecting one of the transmission mode and the reception mode.

The GSM transmitter side filter 1 and the DCS transmitter side filter 4 have input terminals 23 and 24, respectively, which are connected to a GSM transmitter (GSM TX) and a DCS transmitter (DCS TX), respectively, both being not shown. While, the GSM receiver side filter 13 and the DCS receiver side filter 14 have output terminals 26 and 27, respectively, which are connected to a GSM receiver (GSM RX) and a DCS receiver (DCS RX), respectively, both being not shown.

During a transmission mode, the third switch 11 is operated so that the wiper contact 18 is connected to the first fixed contact 12. When a GSM RF signal from the GSM transmitter is intended to be transmitted, the first switch 2 is turned on. Thus, the GSM RF signal is transferred to antenna 21 through the GSM transmitter side filter 1, first switch 2, third switch 11 and antenna terminal 19 and is radiated from the antenna 21. Then, since the second switch 5 is turned off, the GSM RF signal is prevented from flowing to the DCS transmitter side filter 4. The GSM RF signal is also prevented from flowing to the GSM receiver side filter 13 and the DCS receiver side filter 14 because third switch 11 is operated to select the transmission mode.

When a DCS RF signal from the DCS transmitter is desired to be transmitted during the transmission mode, the first switch 2 is turned off and the second switch 5 is turned on. Then, the DCS RF signal is radiated from the antenna 21 but is prevented from flowing to the GSM transmitter side filter 1, the GSM receiver side filter 13, and the DCS receiver side filter 14.

Thus, in the antenna sharing device 10 for dual frequency band, no RF transmission signal enters into the receiver side circuits. Therefore, each of the transmitter side filters only has an attenuation property for cutting twice or three times harmonic components of the RF signal frequency, and can, therefore, be composed of a low pass filter.

The low pass filter does not have a blocking attenuation around a receiving frequency band in the vicinity of its passing band, and has, therefore, an insertion loss smaller than,the band elimination filter. Therefore, the antenna sharing device for dual frequency band according to this embodiment is low in the transmission power loss in comparison with the conventional device comprising two duplexers using band eliminator filters, and is, therefore, superior to the conventional one in the service life of a battery used.

Further, the low pass filter can often be implemented by use of inductance coils and capacitors without use of dielectric resonator which is necessary in the band elimination filter. Therefore, the transmitter side filter using the low pass filter is small in size and low in cost in comparison with that in the conventional duplexer.

During the reception mode, the third switch 11 is operated so that the wiper contact 18 is disconnected from the first fixed contact 12 and is connected to the second fixed contact 17. Therefore, the input terminals 15 and 16 of the GSM receiver side filter 13 and the DCS receiver side filter 14 are connected to the antenna 21 through the third switch 11. A reception signal received at the antenna 21 is applied to both of the GSM receiver side filter 13 and the DCS receiver side filter 14. When the reception signal is a signal for the GSM, the GSM receiver side filter 13 filters the reception signal which is applied to the GSM receiver through the terminal 26. On the other hand, the reception signal is a signal for the DCS, the DCS receiver side filter 14 filters the reception signal which is fed to the DCS receiver through the terminal 27.

A second embodiment of the present invention will be described with reference to Fig. 4.

The antenna sharing device for dual frequency band according to the second embodiment of the present invention is similar to that shown in Fig. 3 but use of a PIN diode for each of the switches and use of a phase shifter. The similar parts are represented by the same reference numerals in Fig. 3.

Referring to Fig. 4, first PIN diode 31 is connected between the output of the GSM transmitter filter 1 and the antenna terminal 19, and second PIN diode 32 is connected between the output of the DCS transmitter filter 4 and the antenna terminal 19. In order to feed electric currents or DC currents to the PIN diodes 31 and 32 to control turn on and off of the PIN diodes 31 and 32, control terminals 34 and 35 are connected to anode terminals of the PIN diodes 31 and 32, respectively. The phase shifter 20 is connected between an antenna terminal 19 and a common connection point of the input terminals of the GSM receiver side filter 13 and the DCS receiver side filter 14. A third PIN diode 33 is connected between the common connection point and the ground. The phase shifter 20 is for shifting a phase of the reception signal fed from the antenna 21 by λ/4, λ being a wavelength of the reception signal.

For transmission of GSM RF signal from the GSM transmitter, a control signal of a DC voltage/current of, for example, 3 V/5 mA is supplied to the control terminal 34, a resistance of the first PIN diode 31 is reduced, that is, the first PIN diode 31 is turned on. This makes a similar condition where the output terminal of the GSM transmitter side filter 1 is connected to the antenna terminal 19 through the first and the third switches 2 and 11 in Fig. 3. Then, the resistance of the third PIN diode 33 is also reduced so that the impedance of the λ/4 phase shifter 20 increases. This condition is similar to the transmission mode of the third switch 11 in Fig. 3 where the wiper contact 18 is disconnected from the second fixed contact 17 but is connected to the first fixed contact 12. Thus, the GSM RF signal from the GSM transmitter flows through terminal 23, GSM transmitter side filter 1, first PIN diode 31, and antenna terminal to the antenna 21, and is radiated from the antenna 21.

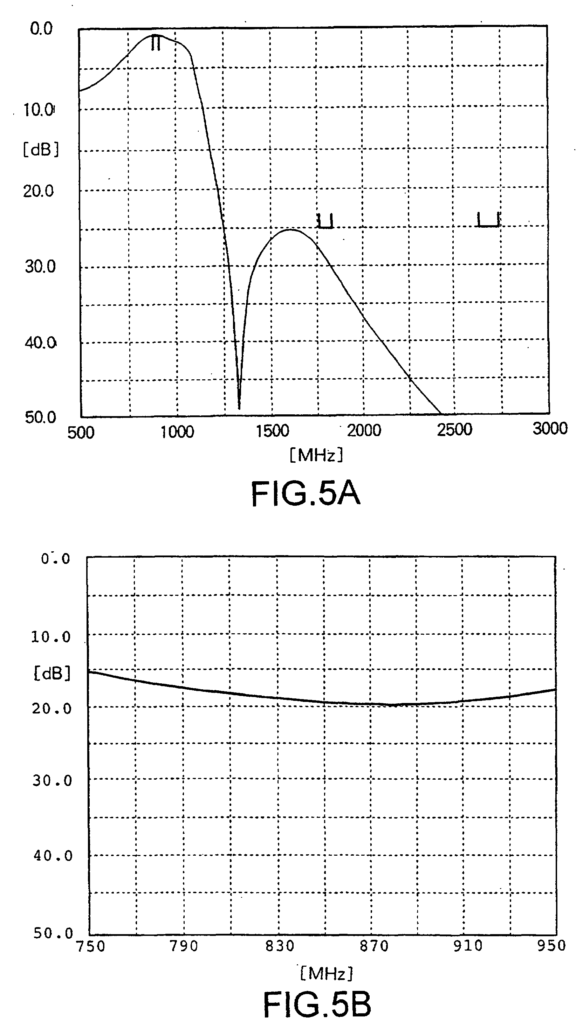

Referring to Figs. 5A and 5B, an example of the GSM transmitter side filter 1 has a passing frequency characteristic and an isolation frequency characteristic shown therein.

On the other hand, when a DCS RF signal from the DCS transmitter is intended to be transmitted, the control signal is applied through the control terminal 35 to the second PIN diode 32. Similarly, the second PIN diode 32 and the third PIN diode 33 are turned on, and the phase shifter 20 has an increased impedance. Thus, the DCS RF signal flows from the DCS transmitter to the antenna 21 through terminal 24, DCS transmitter side filter 4, second PIN diode 32 and antenna terminal 19, and is radiated from the antenna 21.

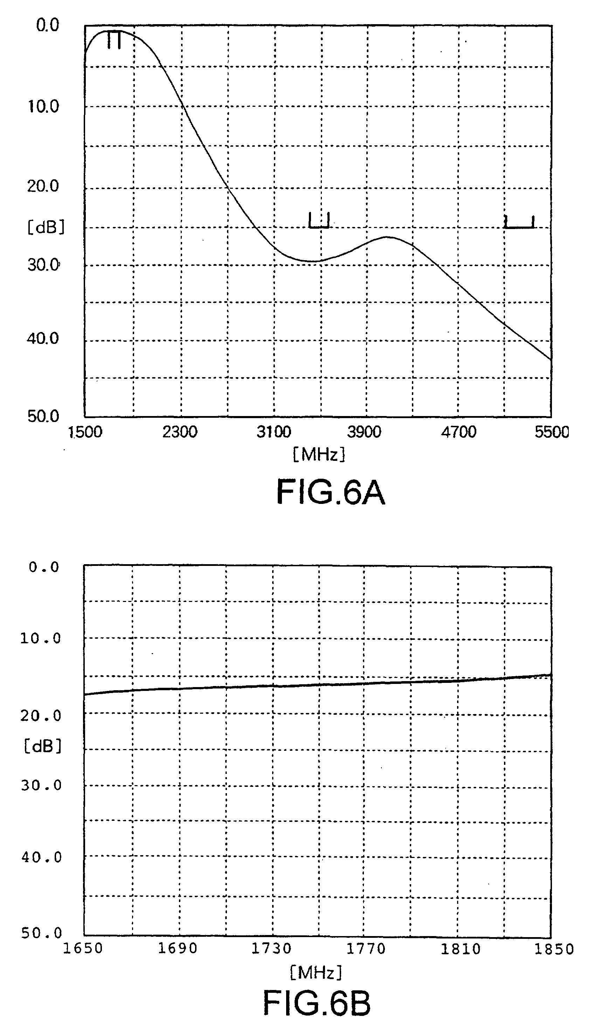

Referring to Figs. 6A and 6B, an example of the DCS transmitter side filter 4 has a passing frequency characteristic and an isolation frequency characteristic as shown therein.

During the reception mode, it is not necessary to apply a DC voltage/current signal as the control signal to the control terminals 34 and 35. Then, the resistance of the PIN diodes 31, 32, and 33 is maintained large or turned off. At the condition, the phase shifter 20 only shifts a phase of an input signal and permits the input signal to pass therethrough. This condition is corresponding to a condition in Fig. 3 where the first and the second switches 2 and 5 are turned off, while the third switch 11 is operated to select the reception mode. Therefore, the reception signal fed from the antenna 21 is applied to the GSM receiver side filter 13 and the DCS receiver side filter 14.

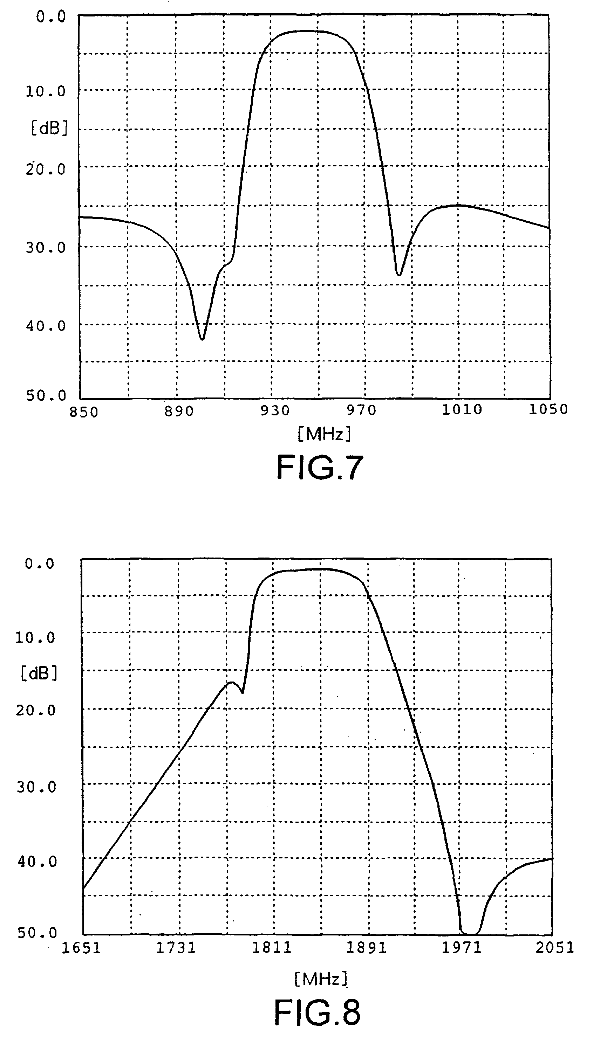

Referring to Fig. 7, an example of the GSM receiver side filter 13 has a frequency characteristic shown therein. The GSM receiver side filter 13 is a band pass filter having a passing characteristic around 900 MHz which is the GSM frequency band and an attenuation around 1800 MHz which is the DCS frequency band.

Referring to Fig. 8, an example of the DCS receiver side filter 14 has a frequency characteristic shown therein. The DCS receiver side filter 13 is a band pass filter having a passing characteristic around 1800 MHz which is the DCS frequency band and an attenuation around 900 MHz which is the GSM frequency band.

Therefore, no GSM reception signal enters into the DCS receiver, and no DCS reception signal enters into the GSM receiver. While, the GSM signal is fed to the GSM receiver and DCS signal is fed to the DCS receiver.

As described above, the combination of PIN diodes 31, 32, and 33 and λ/4 phase shifter 20 can realize a selection of three modes, that is, a GSM transmission mode (TX(GSM)-ANT) where the GSM transmitter side filter 1 is connected to the antenna 21, a DCS transmission mode (TX(DCS)-ANT) where the DCS transmitter side filter 4 is connected to the antenna 21, and a reception mode (ANT-RX(GSM,DCS) where the antenna 21 is connected to both of the GSM receive side filter 13 and the DCS receiver side filter 14, by selecting a current/voltage applied to the control terminals 34 and 35. The logic table is shown in the following TABLE 1.

**TABLE 1**

| | TX(GSM)-ANT | TX(DCS)-ANT | ANT-RX(GSM,DCS) |
|---|---|---|---|
| control terminal 34 | H | L | L |
| control terminal 35 | L | H | L |
| H: 3V/5mA, L: 0V/0mA | | | |

In the embodiment of the present invention as described above, the GSM and DCS receiver side filters are connected to the antenna in parallel with each other. Therefore, it is easy to realize a standby condition for waiting reception of a signal of any one of two communication systems using different frequency bands. A switch element for selecting a reception mode is not necessary to be supplied with any voltage/current therefor, so that no power consumption is taken during the standby period. As a result, the battery life is considerably extended and the standby period can therfore be extended as compared to the conventional device using two duplexers.

## Claims

1. An antenna sharing device (10) for commonly using a single antenna (21) by a first transmitter and receiver for a first communication system using a first frequency band and a second transmitter and receiver for a second communication system using a second frequency band, said device comprising:
a first transmitter side filter (1) to be connected to said first transmitter and having a first output terminal (3) for passing a first transmission frequency signal from said first transmitter to said first output terminal (3);
a second transmitter side filter (4) to be connected to said second transmitter and having a second output terminal (6) for passing a second transmission frequency signal from said second transmitter to said second output terminal (6);
a first switch (2) connected to said first output terminal (3) of said first transmitter side filter (1) for permitting said first transmission frequency signal on said first output terminal (3) to flow to a transmission point (8, 9) when said first switch (2) is turned on;
a second switch (5) connected to said second output terminal (6) of said second transmission side filter (4) for permitting said second transmission frequency signal on said second output terminal (6) to flow to said transmission point (8, 9) when said second switch (5) is turned on;
a first receiver side filter (13) to be connected to said first receiver and having a first input terminal (15) connected to a reception point (15, 16) for receiving a reception signal, said first receiver side filter (13) being for selecting a first reception frequency signal from said reception signal received from said first input terminal (15) to filter said first reception frequency signal to said first receiver;
a second receiver side filter (14) to be connected to said second receiver and having a second input terminal (16) connected to said reception point (15, 16) for receiving said reception signal, said second receiver side filter (14) being for selecting a second reception frequency signal from said reception signal received from said second input terminal (16) to filter said second reception frequency signal to said second receiver; and
a mode selector switch (11) having a common connection point (19) to be connected to said single antenna (21) said mode selection switch (11) connecting said common connection point (19) to said reception point (15, 16) when said mode selector switch (11) is in a reception mode, said mode selector switch (11) disconnecting said common connection point (19) and said transmission point (8, 9) from said reception point (15, 16) but permitting signal transmission from said transmission point (8, 9) to said common connection point (19) when said mode selection switch (11) is in a transmission mode;
said first and second transmitter side filters (1, 4) are composed of first and second low pass filters (LPF), respectively, said first and second receiver side filters (13, 14) are composed of first and second band pass filters (BPF), respectively, and said first and second switches are first and second electronic switches (31, 32), respectively, said transmission point is directly connected to said common connection point (19), **characterised in that**
said mode selector switch comprises a λ/4 phase shifter (20), λ being a wavelength of said reception signal, connecting between said common connection point (19) and said reception point, and a third electronic switch (33) connecting between said reception point and the ground.

2. An antenna sharing device as claimed in claim 1, wherein said mode selector switch (11) comprises a first and second fixed contacts (12, 17) connected to said transmission point (8, 9) and said reception point (15, 16) respectively, and a wiper contact (18) connected to said common connection point (19) and to be selectively brought into contact with one of said first and second fixed contacts (12, 17) for selectively connecting said common connection point (19) to said transmission point (8, 9) or said reception point (15, 16).

3. An antenna sharing device as claimed in claim 1 wherein each of said first, second and third electronic switches (31, 32, 33) is composed of at least one of PIN diode and MMIC so that each of said first, second and third electronic switches (31, 32, 33) is turned on when a DC current/voltage is applied thereto.

4. An antenna sharing device as claimed in claim 1, wherein said first communication system is GSM and said second communication system is DCS.

5. An antenna sharing device as claimed in claim 1, wherein the first transmission and reception frequencies are in a range of 800-1500 MHz and the second transmission and reception frequencies are in a range of 1500-3000 MHz.

## Patentansprüche

1. Antennenteilungseinrichtung (10) zum gemeinsamen Benutzen einer einzelnen Antenne (21) durch einen ersten Sender und Empfänger für ein erstes Kommunikationssystem unter Benutzung eines ersten Frequenzbandes und einen zweiten Sender und Empfänger für ein zweites Kommunikationssystem unter Benutzung eines zweiten Frequenzbandes, wobei die Einrichtung aufweist:
ein erstes senderseitiges Filter (1), das mit dem ersten Sender zu verbinden ist und einen ersten Ausgangsanschluß (3) aufweist, zum Durchlassen eines ersten Sendefrequenzsignales von dem ersten Sender zu dem ersten Ausgangsanschluß (3);
ein zweites senderseitiges Filter (4), das mit dem zweiten Sender zu verbinden ist und einen zweiten Ausgangsanschluß (6) aufweist, zum Durchlassen eines zweiten Sendefrequenzsignales von dem zweiten Sender zu dem zweiten Ausgangsanschluß (6);
einen ersten Schalter (2), der mit dem ersten Ausgangsanschluß (3) des ersten senderseitigen Filters (1) verbunden ist, zum Ermöglichen, daß das erste Sendefrequenzsignal auf dem ersten Ausgangsanschluß (3) zu einem Sendepunkt (8, 9) fließt, wenn der erste Schalter (2) eingeschaltet ist;
einen zweiten Schalter (5), der mit dem zweiten Ausgangsanschluß (6) des zweiten senderseitigen Filters (4) verbunden ist, zum Ermöglichen, daß das zweite Sendefrequenzsignal auf dem zweiten Ausgangsanschluß (6) zu dem Sendepunkt (8, 9) fließt, wenn der zweite Schalter (5) eingeschaltet ist;
ein erstes empfängerseitiges Filter (13), das mit dem ersten Empfänger zu verbinden ist und einen ersten Eingangsanschluß (15) aufweist, der mit einem Empfangspunkt (15, 16) verbunden ist, zum Empfangen eines Empfangssignales, wobei das erste senderseitige Filter (13) zum Auswählen eines ersten Empfangsfrequenzsignales aus dem Empfangssignal diente, das von dem ersten Eingangsanschluß (15) empfangen ist, zum Filtern des ersten Empfangsfrequenzsignals zu dem ersten Empfänger;
ein zweites empfängerseitiges Filter (14), das mit dem zweiten Empfänger zu verbinden ist und einen zweiten Eingangsanschluß (16) aufweist, der mit dem Empfangspunkt (15, 16) verbunden ist, zum Empfangen des Empfangssignales, wobei das zweite empfängerseitige Filter (14) zum Auswählen eines zweiten Empfangsfrequenzssignals aus dem Empfangssignal dient, das von dem zweiten Eingangsanschluß (16) empfangen ist, zum Filtern des zweiten Empfangsfrequenzsignales zu dem zweiten Empfänger; und
einen Modusauswahlschalter (11) mit einem gemeinsamen Verbindungspunkt (19), der mit der einzelnen Antenne (21) zu verbinden ist, wobei der Modusauswahlschalter (11) den gemeinsamen Verbindungspunkten (19) mit dem Empfangspunkt (15, 16) verbindet, wenn der Modusauswahlschalter (11) in einem Empfangsmodus ist, der Modusauswahlschalter (11) den gemeinsamen Verbindungspunkt (19) und den Übertragungspunkt (8, 9) von dem Empfangspunkt (15, 16) trennt, aber eine Signalübertragung von dem Sendepunkt (8, 9) zu dem gemeinsamen Verbindungspunkt (19) erlaubt, wenn der Modusauswahlschalter (11) in einem Sendemodus ist;
wobei das erste und das zweite senderseitige Filter (1, 4) aus einem ersten bzw. zweiten Tiefpaßfilter (LPF) zusammengesetzt sind, das erste und das zweite empfängerseitige Filter (13, 14) aus einem ersten bzw. zweiten Bandpaßfilter (BPF) zusammengesetzt sind und der erste und der zweite Schalter ein erster bzw. zweiter Elektronikschalter (31, 32) sind, der Sendepunkt direkt mit dem gemeinsamen Verbindungspunkt (19) verbunden ist;
**dadurch gekennzeichnet,**
**daß** der Modusauswahlschalter einen λ/4-Phasenschieber (20) aufweist, wobei λ eine Wellenlänge des Empfangssignales ist, der zwischen den gemeinsamen Verbindungspunkten (19) und den Empfangspunkt geschaltet ist und ein dritter Elektronikschalter (33) zwischen den Empfangspunkt und Masse geschaltet ist.

2. Antennenteilungseinrichtung nach Anspruch 1, bei der der Modusauswahlschalter (11) einen ersten und einen zweiten festen Kontakt (12, 17), die mit dem Sendepunkt (8, 9) bzw. dem Empfangspunkt (15, 16) verbunden sind, und einen Schleifkontakt (18), der mit dem gemeinsamen Verbindungspunkt (19) verbunden ist und selektiv in Kontakt mit einem des ersten und des zweiten Kontaktes (12, 17) gebracht wird, zum selektiven Verbinden des gemeinsamen Verbindungspunktes (19) mit dem Sendepunkt (8, 9) oder dem Empfangspunkt (15, 16), aufweist.

3. Antennenteilungseinrichtung nach Anspruch 1, bei der jeder des ersten, zweiten und dritten Elektronikschalters (31, 32, 33) aus mindestens einer PIN Diode und MMIC zusammengesetzt ist, so daß jeder des ersten, zweiten und dritten Elektronikschalters (31, 32, 33) eingeschaltet wird, wenn ein Gleichstrom/Spannung daran angelegt wird.

4. Antennenteilungseinrichtung nach Anspruch 1, bei der das erste Kommunikationssystem GSM ist und das zweite Kommunikationssystem DCS ist.

5. Antennenteilungseinrichtung nach Anspruch 1, bei der die erste Sende- und Empfangsfrequenz in einem Bereich von 800 - 1500 MHz ist und die zweite Sende- und Empfangsfrequenz in einem Bereich von 1500 - 3000 MHz ist.

## Revendications

1. Dispositif de partage d'antenne (10) pour une seule antenne (21) commune entre une premier émetteur et récepteur pour un premier système de communication utilisant une première bande de fréquence et un second émetteur et récepteur pour un second système de communication utilisant une seconde bande de fréquence,
dispositif comprenant :
- un premier filtre (1) du côté de l'émetteur relié au premier émetteur et ayant une première sortie (3) pour un premier signal de fréquence d'émission du premier émetteur vers la première sortie (3),
- un second filtre d'émetteur (4) relié au second émetteur et ayant une seconde sortie (6) pour un second signal de fréquence d'émission du second émetteur vers la seconde sortie (6),
- un premier commutateur (2) relié à la première sortie (3) du filtre (1) du côté du premier émetteur pour permettre à ce premier signal de fréquence d'émission de la première sortie (3) de passer par un chemin de transmission (8, 9) lorsque le premier commutateur (2) est conducteur,
- un second commutateur (5) relié à la seconde sortie (6) du filtre du second émetteur (4) pour permettre au second signal de fréquence d'émission de la seconde sortie (6) de passer par les points d'émission (8, 9) lorsque le second commutateur (5) est conducteur,
- un filtre (13) du côté du premier récepteur relié au premier récepteur et ayant une première entrée (15) reliée à un point de réception (15, 16) pour recevoir un signal de réception, le filtre (13) du côté du premier récepteur sélectionnant un premier signal de fréquence de réception dans le signal de réception reçu par la première entrée (15) pour transmettre ce premier signal de fréquence de réception au premier récepteur,
- un filtre (14) du côté du second récepteur relié à celui-ci et ayant une seconde entrée (16) reliée au point de réception (15, 16) pour recevoir le signal de réception, le filtre (14) du côté du second récepteur permettant de sélectionner un second signal de fréquence de réception dans le signal de réception reçu par la seconde entrée (16) pour filtrer ce signal et le transmettre au second récepteur, et
- un commutateur sélecteur de mode (11) ayant un point de connexion commun (19) relié à l'antenne commune (21), ce commutateur de sélection de mode (11) reliant le point de connexion commun (19) au point de réception (15, 16) lorsque le commutateur de sélccteur de ode (11) est en mode de réception, le commutateur sélecteur de mode (11) coupant le point de connexion commun (19) et le point de transmission (8, 9) du point de réception (15, 16), mais permettant la transmission du signal du point d'émission (8, 9) vers le point de connexion commun (19) lorsque le commutateur sélecteur de mode (11) est en mode d'émission,
- les filtres (1, 4) du côté du premier et du second émetteur étant composés d'un premier et d'un second filtre passe-bas (LPF) respectifs, les filtres (13, 14) du côté du premier et du second récepteur étant composés d'un premier et d'un second filtre passe-bande (BPF) respectifs et les premiers et seconds commutateurs sont des premiers et seconds commutateurs électroniques (31, 32) respectifs, le point d'émission étant directement relié au point de connexion commun (19),
**caractérisé en ce que**
lc commutateur sélecteur de mode comporte un déphaseur λ/4, (20), λ étant la longueur d'onde du signal de réception, déphaseur assurant la liaison entre le point de connexion commun (19) et le point de réception, et un troisième commutateur électronique (33) assure la liaison entre le point de réception et la masse.

2. Dispositif de partage d'antenne selon la revendication 1,
**caractérisé en ce que**
le commutateur sélecteur de mode (11) comporte un premier et un second contact fixe (12, 17) reliés respectivement au point de transmission (8, 9) et au point de réception (15, 16) ainsi qu'un contact mobile (18) relié au point de connexion commun (19) et mis sélectivement en contact avec le premier ou le second contact fixe (12, 17) pour relier sélectivement le point de connexion commun (19) au point de transmission (8, 9) ou au point de réception (15, 16).

3. Dispositif de partage d'antenne selon la revendication 1,
**caractérisé en ce que**
chacun des premier, second et troisième commutateurs électroniques (31, 32, 33) est composé d'au moins une diode PIN et MMIC de façon que chacun des premier, second et troisième commutateurs électroniques (31, 32, 33) soit conducteur lorsqu'il reçoit une tension de courant continu.

4. Dispositif de partage d'antenne selon la revendication 1,
**caractérisé en ce que**
le premier système de communication est un système GSM et le second système de commutation est un système DCS.

5. Dispositif de partage d'antenne selon la revendication 1,
**caractérisé en ce que**
la première fréquence d'émission et celle de réception se situent dans une plage 800-1500 MHz et la seconde fréquence d'émission et celle de réception sont dans une plage comprise entre 1500 et 3000 MHz.
